# EUROPEAN PATENT APPLICATION

(11) **EP 2 183 949 A1**
(43) Date of publication of application: **12.05.2010**
(21) Application number: 08425718.7
(22) Date of filing: 10.11.2008
(51) Int. Cl.: A01B 29/04, A01B 71/04, A01C 5/06, B60B 3/08, B60B 27/02

(54) **Wheel for agricultural equipment and agricultural equipment**

(71) Applicant: M.B.F. S.r.l., 42025 Cavriago, Reggio Emilia (IT)
(72) Inventor: Ponzoni, Sante, 42025 Cavriago, Reggio Emilia (IT)
(74) Representative: Leihkauf, Steffen Falk

(57) **Abstract**

A wheel (1) for agricultural equipment comprises a bearing-holding hub (2) having one or more bearing seats (3, 4) receiving one or more bearings (5, 6) for a rotating connection of the wheel (1) to an axis (7) of the agricultural equipment, which defines the rotational axis (R) of the wheel (1) ; a rim (8) having a first half shell (9) with a first tyre seat (11) and a second half shell (10) with a second tyre seat (12) adapted to receive a tyre (13), in which the half shells (9, 10) are mutually connectable so that the first (11) and second (12) tyre seats clamp an anchoring portion (14) of the tyre (13), locking the tyre (13) relative to the rim (8). Each of the bearing seats (3, 4) is formed by moulding in a single piece with one of the half shells (9, 10).

## Description

The present invention generally relates to the field of agricultural equipment which can be dragged by a tractor or truck in order to carry out processing operations or treatments of soils and/or cultivations and/or livestock and zootechnical farming. The present invention relates in particular to a wheel for such agricultural equipment which, in view of the uses indicated above, has to meet some technical and functional needs, which will be described below with reference to the particular example of a sowing machine for cereal crops.

Sowing machines for cereal crops are usually dragged by tractors through a triangular frame (three-point attachment) and, in order not to overload the same tractor with projecting parts, and in order to ensure a correct positioning of the sowing machine relative to the soil, such sowing machines are provided with one or more wheels in order to rest their own weight at least partially directly on the soil.

In order to avoid an undue compaction of the soil on which the agricultural equipment wheels rest, the latter need a high contact surface with the soil, which is usually achieved by a high width and a large diameter of the tyre which, in turn, is subjected to a low inner air pressure. It shall be apparent that the contact surfaces between the wheel and soil (and the relative diameters and widths of the wheels) cannot be increased beyond specific thresholds without unduly increasing the costs and dimensions of the same wheels.

Therefore, it is desirable to further reduce the pressure of the agricultural wheel on the soil, while decreasing the production costs for the same wheel.

The known wheels for agricultural equipment have a bearing-holding hub, a rim composed by two steel sheet half shells connected to the bearing-holding hub, and a tyre connected to the rim.

The bearing-holding hub usually comprises a steel tube at the ends of which two bearing seats are formed, by chip removal precision mechanical processing, which receive respective bearings in order to provide a rotating connection of the wheel to an axis of the agricultural equipment. A first one of the two steel sheet half shells is connected to the bearing-holding hub through a welding to the steel tube in the proximity of a first end thereof. In order to ensure the absolute symmetry of the wheel relative to the rotational axis, and a proper clamping of the tyre between the two half shells of the rim, such welding requires a high degree of precision as regards the relative positioning between the hub tube and the sheet of the first half shell and the timing of the welding in order to avoid mispositionings and ovalizations of the rim and the bearing seats.

The second steel sheet half shell is connected to the bearing-holding hub by reversible screwing to a steel connection flange, in turn welded to the steel tube in the proximity of a second end thereof.

In view of the symmetry and geometrical precision needs of the wheel, also the welding between connection flange and steel tube, and the drilling of the holes receiving the connecting screws require a particular precision and care during the carrying out thereof.

The final assembling of the known wheel takes place by inserting the second sheet half shell on the hub second end and by screwing it to the connection flange so as to align it and bring it closer to the first half shell already connected to the hub, and by clamping the tyre between the two half shells in order to determine and keep the correct position and shape thereof relative to the wheel rotational axis.

Due to the mechanical structure of the known wheels for agricultural equipment, the production thereof results to be consuming in terms of time, cost, skilled labour, and machineries employed.

Therefore, the object of the present invention is to propose a wheel for agricultural equipment having such characteristics as to obviate the drawbacks cited with reference to the solutions which are known so far.

A particular object of the present invention is to propose a wheel for agricultural equipment, in particular for sowing machines for cereal crops, having such characteristics as to make the manufacturing of such wheel easier and cost-effective.

A still further object of the present invention is to propose a wheel for agricultural equipment, in particular for sowing machines for cereal crops, having such characteristics as to reduce the pressure between wheel and soil, while keeping the wheel cost and dimension constant.

These and other objects are achieved by a wheel for agricultural equipment, in particular for a sowing machine for cereal crops, according to claim 1.

In accordance with the invention, a wheel for agricultural equipment, in particular for sowing machines for cereal crops, comprises
- a bearing-holding hub having one or more bearing seats receiving one or more bearings for a rotating connection of the wheel to an axis of the agricultural equipment;
- a rim having a first half shell with a first tyre seat and a second half shell with a second tyre seat, said first and second tyre seats being adapted to receive a tyre,
in which said half shells being mutually connectable so that said first and second tyre seats clamp an anchoring portion of said tyre, thus locking the tyre relative to the rim,
in which each of said bearing seats is formed by moulding in a single piece with one of the half shells.

Thereby, a precise shape of the bearing seats and a precise positioning thereof relative to the rim are achieved, while obviating the costs and difficulties in the precision welding operations.

The dependant claims relate to advantageous embodiments.

In order to better understand the invention, and appreciate the advantages thereof, some exemplary, non-limiting embodiments thereof are described herein below, with reference to the annexed drawings, in which:

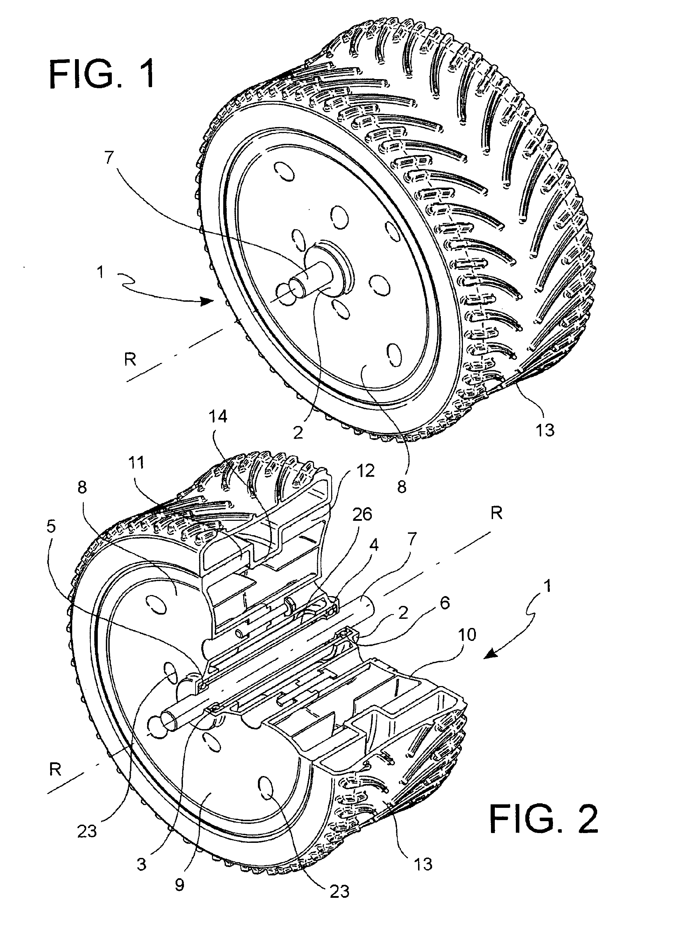

Fig. 1 is a perspective view of a wheel for a agricultural equipment, in particular for a sowing machine for cereal crops, according to an embodiment of the invention;

Fig. 2 is a sectional, perspective view of the wheel in Fig. 1;

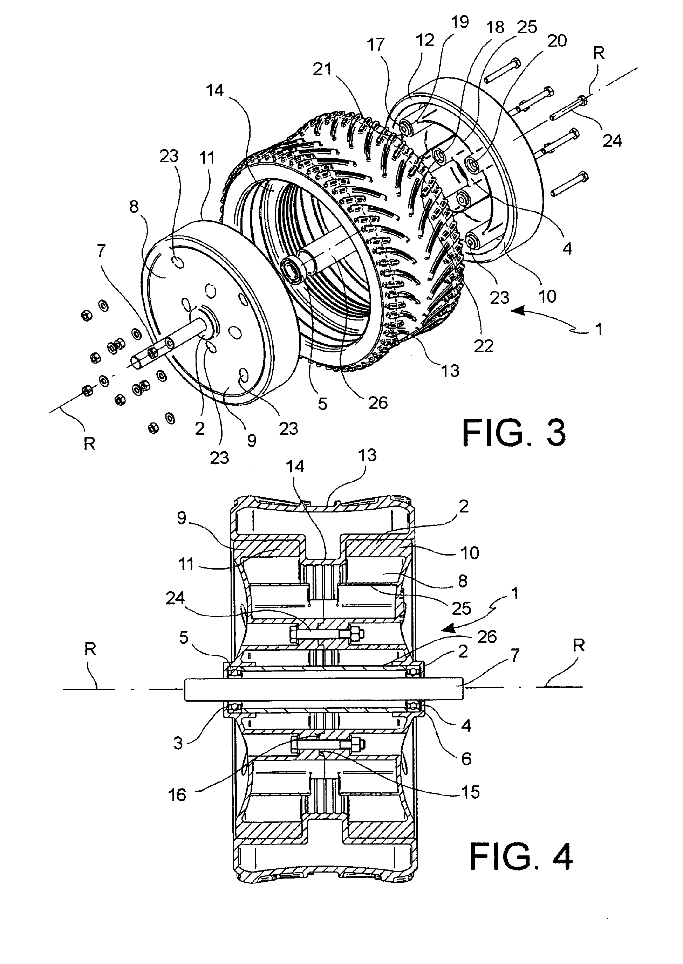

Fig. 3 is an exploded view of the wheel in Fig. 1;

Fig. 4 is a radial sectional view of the wheel in Fig. 1;

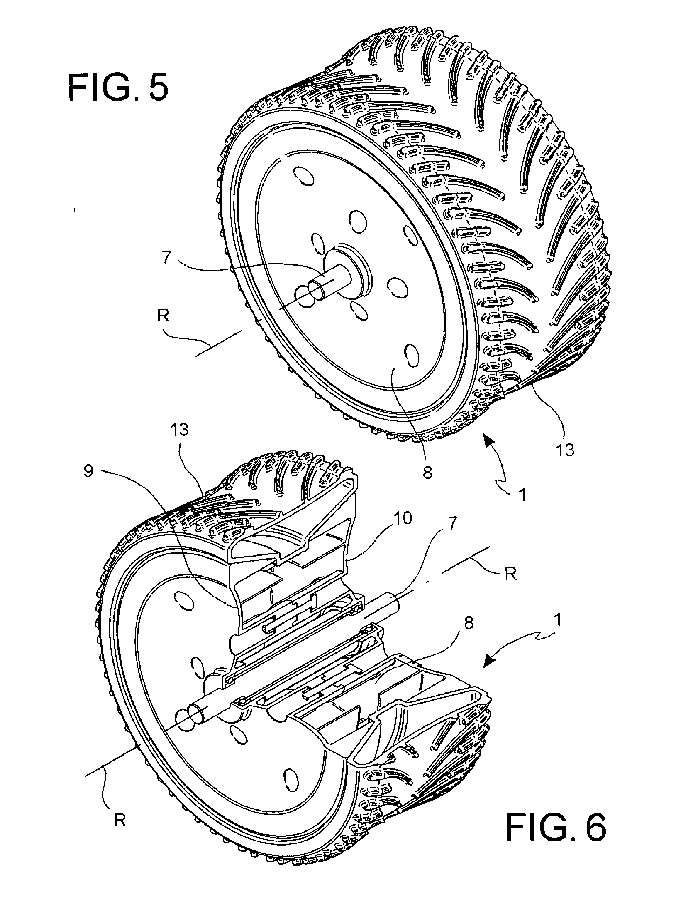

Fig. 5 is a perspective view of a wheel for an agricultural equipment, in particular for a sowing machine for cereal crops, according to a further embodiment of the invention;

Fig. 6 is a sectional, perspective view of the wheel in Fig. 5;

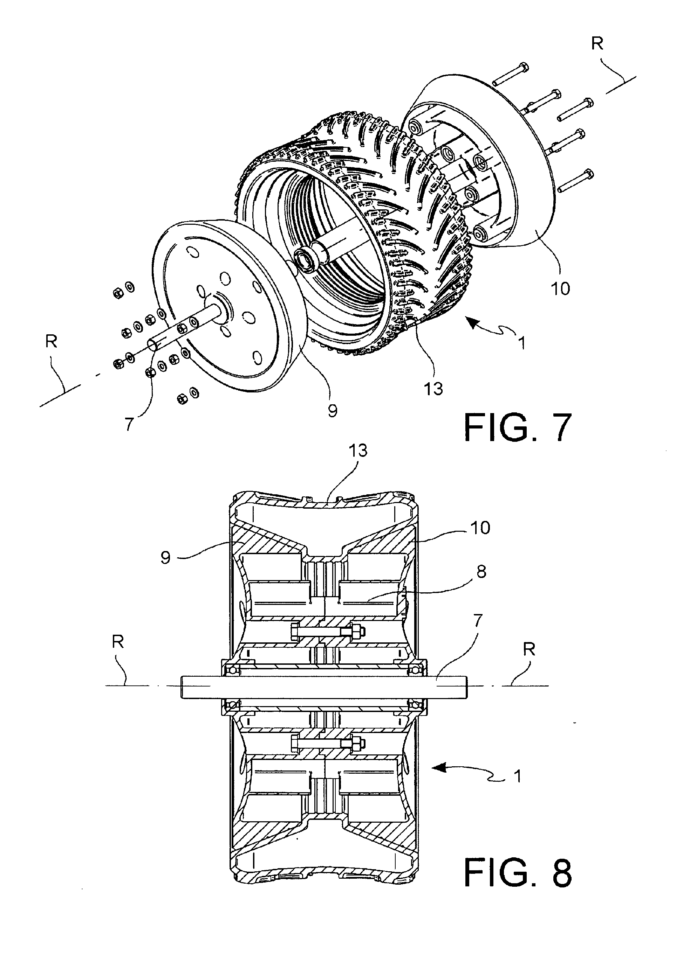

Fig. 7 is an exploded view of the wheel in Fig. 5;

Fig. 8 is a radial sectional view of the wheel in Fig. 5;

With reference to the Figures, a wheel for agricultural equipment, in particular sowing machines for cereal crops, is generally indicated with the reference numeral 1.

The wheel 1 comprises a bearing-holding hub 2 with one or more bearing seats 3, 4 receiving one or more bearings 5, 6 for a rotating connection of the wheel 1 to an axis 7 of the agricultural equipment which defines the rotational axis R of the wheel 1.

The wheel 1 further comprises a rim 8 composed by a first half shell 9 with a first tyre seat 11, and a second half shell 10 with a second tyre seat 12, in which the first 11 and second 12 tyre seats are so configured as to be able to receive an inflatable tyre 13, with closed inner tube, or the like.

The half shells 9, 10 are mutually connectable so that the first 11 and second 12 tyre seats clamp an anchoring portion 14 of the tyre 13 so as to lock the tyre 13 relative to the rim 8. The connection between the two half shells 9, 10 can be implemented through screws, bolts, snap-fit, or press-fit, or other connection techniques allowing a forced approach of the two half shells.

According to an aspect of the present invention, each of the bearing seats 3, 4 is formed by moulding in a single piece with one of the half shells 9 and/or 10. Within the scope of the present description, the term moulding includes the injection moulding, casting, melting, and die-casting, and in general any types of forming in which a paste-like, liquid, or powdery material is filled into a matrix (mould) in which a setting of the material takes place, which material takes a shape which is dictated by the geometrical characteristics of the mould.

According to an advantageous embodiment, both the half shells 9, 10 are formed in a single piece by moulding.

Advantageously, the first half shell 9 comprises at least one first positioning surface 15, and the second half shell 10 comprises at least one second positioning surface 16 geometrically complementary to the first positioning surface 15, so as to provide a shape-coupling which ensures a correct mutual position of the two half shells 9, 10.

In particular, the first positioning surfaces 15 and the geometrically complementary second positioning surfaces 16 can be so configured as to ensure a correct mutual position of the two half shells 9, 10 in the axial and/or radial and/or circumferential direction with reference to the rotational axis R, as well as to ensure a parallel positioning of the two half shells 9, 10.

Thanks to the forming of the positioning surfaces 15, 16 by moulding in a single piece with the respective half shells 9, 10, it becomes possible an industrial repeatability of the dimensions and the correct symmetry of the wheel 1.

According to a preferred, though non-limiting embodiment, the first and second positioning surfaces 15, 16 preferably define cylindrical or frusto-conical positioning projections 17, and corresponding cylindrical or frusto-conical positioning recesses 18 adapted to receive the positioning projections 17, so as to concentrate the functions of radial, circumferential, axial, and parallel positioning of the half shells 9, 10 in the side 19, 20, front 21, and bottom 22 surfaces of the cylindrical and/or frusto-conical projections and recesses 17, 18, and to define a mechanical guide for the wheel 1 correct assembling.

In accordance with an embodiment, the positioning projections 17 and the positioning recesses 18 are formed in the half shells 9, 10 along one or more circular circumferences relative to the rotational axis R.

In order to further make the half shells 9, 10 production and storing cost-effective and easier, it can be advantageous that both the first and second half shells are formed with exactly the same shape.

To this aim, the present invention envisages the possibility that each half shell 9, 10 comprises one or more series of positioning projections 17 and recesses 18 arranged alternately and preferably with a constant angular pitch along the respective circumference or the respective circumferences relative to the wheel 1 rotational axis R.

In this manner, the first half shell 9 having the same shape of the second half shell 10 can be positioned face-to-face to the latter, and rotated around the rotational axis R until the alignment of the positioning projections 17 thereof with the corresponding positioning recesses 18 of the second half shell 10, and vice versa. A successive axial approach of the two half shells, driven by the coupling between the positioning projections 17 and the corresponding positioning recesses 18 until a complete contact of the side 19, 20, front 21, and bottom 22 surfaces thereof, brings the half shells to the correct position for a definitive connection thereof by means of screws or other mechanical connection means.

In accordance with an embodiment, each half shell 9, 10 comprises a plurality of holes 23 formed at the first and second positioning surfaces 15, 16, in particular in the positioning projections 17 and recesses 18, and adapted to receive screws or bolts 24 for the connection of the first half shell 9 to the second half shell 10. In the case of the screws, they can be screwed in a thread formed in the hole 23 of one of the two half shells. In the case of the bolts 24, they are screwed with respective nuts in order to clamp the two half shells 9, 10 one against the other one.

Alternatively, the present invention also envisages the possibility to equipment the connection between the two half shells by glueing or welding, for example, laser or ultrasound welding. Thanks to the formation of the bearing seats 3, 4 and the positioning surfaces 15, 16 by moulding in a single piece with the respective half shells 9, 10, a welding of the two half shells 9, 10 will result much easier and cost-effective, since a correct positioning during the welding is ensured by the bearing seats and the shape-connection of the positioning surfaces, and the welding may be performed at large distances from the bearing seats, thus avoiding possible risks of an ovalization or mispositionings thereof due to the welding temperatures.

In accordance with an embodiment, the half shells 9, 10 comprise reinforcing ribs 25, preferably facing the wheel 1 inner part, and extending along circular circumferences relative to the rotational axis R. Such reinforcing ribs 25, beside stabilizing the overall shape of the half shells 9, 10, therefore of the wheel 1 rim 8, can also connect a plurality of the above-mentioned positioning projections 17 and recesses 18 in order to ensure a mutual positioning thereof.

In accordance with a still further embodiment of the invention, the wheel 1 comprises a stabilizing-spacing member 26 which is manufactured separately from the two half shells 9, 10, and connected thereto in the proximity of the geometric centre (rotational axis R and symmetry) of the wheel 1. Such stabilizing-spacing member 26 has an elongate, preferably tubular shape, with a first end 27 at least partially inserted in a first bearing seat 3 of the first half shell 9, and abutting against a first bearing 5 received in the first bearing seat 3, and a second end 28 at least partially inserted in a second bearing seat 4 of the second half shell 10 and abutting against a second bearing 6 received in the second bearing seat 4, so as to ensure a correct axial positioning of the bearings in the bearing seats thereof, and to stabilize and stiffen the rim 8 central portion, which constitutes for all practical purposes the above-mentioned bearing-holding hub 2.

In order to reduce the weigh and cost of the wheel 1 material, it is advantageous to form the half shells 9, 10 in a plastic material.

The wheel 1 for agricultural equipment, in particular for sowing machines for cereal crops, has a number of advantages.

Thanks to the formation at least of the bearing seats, and preferably of all the rim half shells, by moulding or fusion or die-casting, and in particular in plastic material, a considerable lowering of the weigh, material cost, and manufacturing time is achieved, while increasing the assembling precision without needing skilled labour.

The inventive characteristics of the wheel for agricultural equipment further allow obviating metal welding operations and the use of steel for the wheel construction.

Finally, the invention allows a dimensional and symmetry precision of the wheel, as well as an industrial repeatability of the wheel geometrical and mechanical characteristics without needing skilled labour and special machineries during the manufacturing and assembling steps.

It shall be apparent that to the wheel for an agricultural equipment, in particular for a sowing machine for cereal crops, according to the present invention, one of ordinary skill in the art, to the aim of achieving contingent, specific needs, will be able to make further modifications and variations, all of them anyhow falling within the protection scope of the invention, as defined by the following claims.

## Claims

1. A wheel (1) for agricultural equipment, comprising:
- a bearing-holding hub (2) having one or more bearing seats (3, 4) receiving one or more bearings (5, 6) for a rotating connection of the wheel (1) to an axis (7) of the agricultural equipment, which defines the rotational axis (R) of the wheel (1);
- a rim (8) having a first half shell (9) with a first tyre seat (11), and a second half shell (10) with a second tyre seat (12), said first (11) and second (12) tyre seats being adapted to receive a tyre (13),
in which said half shells (9, 10) are mutually connectable so that said first (11) and second (12) tyre seats clamp an anchoring portion (14) of said tyre (13), thus locking the tyre (13) relative to the rim (8), **characterized in that** each of said bearing seats (3, 4) is formed by moulding in a single piece with one of the half shells (9, 10).

2. The wheel (1) for agricultural equipment according to claim 1, wherein each of said half shells (9, 10) is manufactured in a single piece by moulding.

3. The wheel (1) for agricultural equipment according to claim 1 or 2, wherein said first half shell (9) comprises at least one first positioning surface (15), and said second half shell (10) comprises at least one second positioning surface (16) which is geometrically complementary to said first positioning surface (15), so as to provide a shape-coupling which ensures a correct mutual position of the two half shells (9, 10).

4. The wheel (1) for agricultural equipment according to the preceding claim, wherein said first positioning surfaces (15) and said geometrically complementary second positioning surfaces (16) are so configured as to ensure a correct mutual position of the two half shells (9, 10) in the:
- axial direction relative to the rotational axis (R); and/or
- radial direction relative to the rotational axis (R); and/or
- circumferential direction relative to the rotational axis (R); and/or
to ensure a parallel positioning of the two half shells (9, 10).

5. The wheel (1) for agricultural equipment according to one of the claims 3 to 4, wherein said first positioning surfaces (15) and said geometrically complementary second positioning surfaces (16) are formed by moulding in a single piece with the respective half shells (9, 10).

6. The wheel (1) for agricultural equipment according to any claim 3 to 5, wherein said first positioning surfaces (15) and said geometrically complementary second positioning surfaces (16) define cylindrical or frusto-conical positioning projections (17), and corresponding cylindrical or frusto-conical positioning recesses (18) adapted to receive said positioning projections (17).

7. The wheel (1) for agricultural equipment according to claim 6, wherein said positioning projections (17) and said positioning recesses (18) are formed in said half shells (9, 10) along one or more circular circumferences relative to the rotational axis (R).

8. The wheel (1) for agricultural equipment according to claim 7, wherein each half shell (9, 10) comprises one or more series of positioning projections (17) and recesses (18) alternately arranged along respective circumferences relative to the wheel (1) rotational axis (R).

9. The wheel (1) for agricultural equipment according to any claim 3 to 8, wherein each half shell (9, 10) comprises a plurality of holes (23) arranged at said first (15) and second (16) positioning surfaces, in particular formed in said positioning projections (17) and recesses (18), and adapted to receive threaded connection members (24) for the connection of the first half shell (9) to the second half shell (10).

10. The wheel (1) for agricultural equipment according to any one of the preceding claims, wherein said half shells (9, 10) comprise reinforcing ribs (25).

11. The wheel (1) for agricultural equipment according to claim 6 and 10, wherein said reinforcing ribs (25) connect a plurality of said positioning projections (17) and recesses (18) so as to ensure a mutual positioning thereof.

12. The wheel (1) for agricultural equipment according to claim 11, wherein said reinforcing ribs (25) extend along one or more circumferences relative to the rotational axis (R).

13. The wheel (1) for agricultural equipment according to any one of the preceding claims, comprising a stabilizing-spacing member (26) which is manufactured separately from the two half shells (9, 10) and connected thereto,
wherein said stabilizing-spacing member (26) has an elongate shape, with a first end (27) at least partially inserted in a first bearing seat (3) of the first half shell (9) and abutting against a first bearing (5) received in said first bearing seat (3), and a second end (28) at least partially inserted in a second bearing seat (4) of the second half shell (10) and abutting against a second bearing (6) received in said second bearing seat (4).

14. The wheel (1) for agricultural equipment according to any one of the preceding claims, wherein said half shells (8, 9) are formed in plastic material.

15. The wheel (1) for agricultural equipment according to any one of the preceding claims, wherein said first half shell (9) has the same shape of said second half shell (10).

16. Agricultural equipment, in particular a sowing machine for cereal crops, comprising an axis (7) and at least one wheel (1) according to any one of the preceding claims, wherein said wheel (1) is rotatably connected to said axis (7).
